# EUROPÄISCHE PATENTSCHRIFT

(11) **EP 3 074 825 B1**
(45) Veröffentlichungstag und Bekanntmachung des Hinweises auf die Patenterteilung: **06.04.2022**
(21) Anmeldenummer: 14814758.0
(22) Anmeldetag: 21.11.2014
(51) Int. Cl.: G05B 19/042, F16K 31/00

(54) **ANORDNUNG MIT EINEM VENTIL UND VERFAHREN ZUM BETREIBEN EINER ANORDNUNG**
ARRANGEMENT WITH A VALVE AND METHOD FOR OPERATING AN ARRANGEMENT
SYSTÈME ÉQUIPÉ D'UNE VANNE ET PROCÉDÉ DE FONCTIONNEMENT D'UN TEL SYSTÈME

(30) Priorität: 25.11.2013 DE 102013019601
(43) Veröffentlichungstag der Anmeldung: 05.10.2016
(73) Patentinhaber: GEA Tuchenhagen GmbH, 21514 Büchen (DE)
(72) Erfinder: SCHERER, Bettina, 97959 Assamstadt (DE); PORATH, Bernd, 23881 Breitenfelde (DE)
(74) Vertreter: Eisenführ Speiser
(86) Internationale Anmeldenummer: PCT/EP2014/003117
(87) Internationale Veröffentlichungsnummer: WO 2015/074763

(56) Entgegenhaltungen:
- WO-A1-2013/107466
- US-A- 5 056 046
- US-A- 6 125 868
- US-A1- 2010 116 365
- US-A1- 2013 190 897

## Beschreibung

Die Erfindung betrifft eine Anordnung mit einem Ventil nach Anspruch 1 und Verfahren zum Betreiben einer Anordnung nach Anspruch 9.

Ventile, insbesondere für die Lebensmittel- und Getränkeindustrie, Biotechnologie, Pharmazie und Feinchemie, können heute mittels Bussystemen in komplexen Anlagen von einer zentralen Anlagensteuerung angesteuert und so in aufwändige Produktionsprozesse eingebunden werden. Diese Ventile besitzen in der Regel einen Ventilgrundkörper mit einem Schließelement, einen Antrieb zum Bewegen des Schließelements und eine Ventilsteuereinrichtung. Diese Ventilsteuereinrichtung steuert den Antrieb und besitzt Anschlüsse zum Ausbilden einer Kabelverbindung zur Anlagensteuerung.

Der Funktionsumfang solcher Ventile führt zu einer Vielzahl ventilbezogener Daten. Hierzu zählt eine sorgfältige Dokumentation, beispielsweise in Form von Bedienungsanleitungen, Serviceanleitungen und Ersatzteillisten.

Gerade in komplexen Prozessanlagen werden unterschiedliche Typen von Ventilen eingesetzt, die sich beispielsweise in Baugröße und Funktion unterscheiden. Hier ist eine Zuordnung der technischen Daten eines Ventils zu seiner Position in der Prozessanlage wichtig, um einen optimalen Prozessverlauf durch eine sichere Ansteuerung und Rückmeldung des Ventils zu gewährleisten. Weiterhin ist die Zuordnung der richtigen Dokumentation zu jedem Ventil notwendig.

Mit der DE 10 2011 085 439 A1 ist bekannt geworden, einen zweidimensionalen Mustercode, beispielsweise einen QR-Code, auf eine Komponente einer Prozessanlage, insbesondere einer Abfüllanlage, anzubringen und mit einem entsprechend ausgerüsteten Mobilgerät auszulesen. Der Mustercode beinhaltet ventilbezogene Daten der Komponente. Dies können auch Betriebsparameter der Komponente sein. Der Mustercode muss bei Änderungen der Betriebsparameter neu erstellt werden.

Anordnungen mit einem Ventil und Verfahren zum Betreiben einer Anordnung der eingangs genannten Art sind beispielsweise aus der WO 2013/107466 A1, der US 2013/190897 A1, der US 2010/116365 A1 und der US 6 125 868 A bekannt geworden.

Es ist daher Aufgabe der Erfindung eine Anordnung mit einem Ventil zu schaffen, in der die Zuordnung ventilbezogener Daten zu dem Ventil vereinfacht ist.

**Diese Aufgabe wird gelöst mit einer Anordnung mit einem Ventil mit den Merkmalen des** Anspruchs 1 und einem Verfahren zum Betreiben einer Anordnung mit einem Ventil mit den Merkmalen des Anspruchs 9. Die Ansprüche 2 bis 8 geben vorteilhafte Weiterbildungen der Anordnung an. Die Ansprüche 10 bis 14 betreffen vorteilhafte Weiterbildungen des Verfahrens.

Der Kerngedanke von Anordnung und Verfahren sieht vor, einerseits eine Datenverbindung zwischen einem Mobilgerät und einer Ventilsteuereinrichtung einzurichten und andererseits mit dem Mobilgerät eine optische Abtastung eines an einem Ventil vorgesehenen optischen Kennzeichens vorzunehmen, um die in der Ventilsteuereinrichtung vorhandenen und von dort ausgelesenen Daten eindeutig einem Ventil zuzuordnen. Die eindeutige Zuordnung von Daten und Ventil vereinfacht die weitere Handhabung der Daten und erleichtern dadurch eine verbesserte Nutzung und Diagnose des Ventils. Anordnung und Verfahren verbessern die Erfassung und Auswertung der Betriebszustände des Ventils.

Anhand eines Ausführungsbeispiels und seiner Weiterbildungen sollen die Erfindung näher erläutert und die Darstellung der Wirkungen und Vorteile vertieft werden.

Es zeigen:
- Fig. 1:: Schematische Darstellung einer Anordnung mit einem Ventil und einem Mobilgerät;
- Fig. 2:: Schematische Darstellung der Funktionsblöcke der Ventilsteuereinrichtung;
- Fig. 3:: Schematische Darstellung einer Anordnung mit einem Ventil, einem Mobilgerät, einer Anlagensteuerung und einer Bereitstellungseinrichtung;
- Fig. 4:: Schematische Darstellung einer Anordnung mit einer alternativen Ausführung des Ventils.

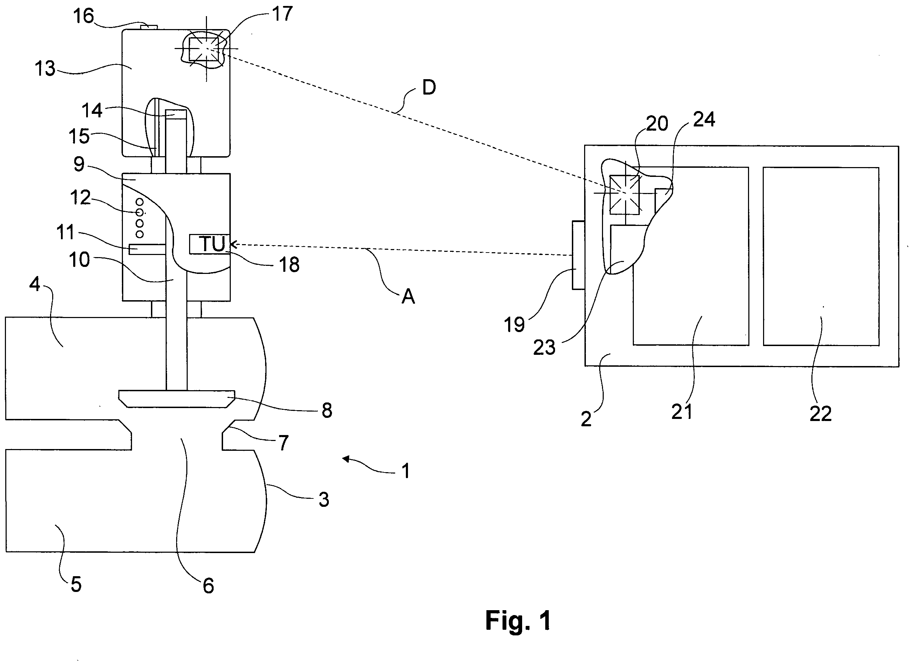

In einer schematischen, teilweise geschnittenen und nicht maßstäblichen Darstellung zeigt Fig. 1 eine Anordnung mit einem Ventil 1 und einem Mobilgerät 2.

Das Ventil 1 besitzt ein Ventilgehäuse 3, welches einen ersten Rohrleitungsanschluss 4 und einen zweiten Rohrleitungsanschluss 5 umfasst. die beide mit Rohrleitungen einer Prozessanlage verbindbar sind. Im Inneren des Ventilgehäuses 3 befindet sich eine Durchtrittsöffnung 6, welche in einer Offenstellung des Ventils 1 eine Fluidverbindung zwischen erstem und zweitem Rohrleitungsanschluss 4 und 5 schafft. Die Durchtrittsöffnung 6 ist von einem Ventilsitz 7 umgeben. Ein Schließelement 8 ist so angeordnet, dass es in Kontakt mit dem Ventilsitz 7 bringbar ist, um die Fluidverbindung zwischen erstem und zweitem Rohrleitungsanschluss 4 und 5 zu unterbrechen und so eine Schließstellung des Ventils 1 herzustellen. Die Offenstellung des Ventils 1 wird durch Trennen des Kontaktes zwischen Schließelement 8 und Ventilsitz 7 bewirkt.

Ein Antrieb 9 ist vorgesehen, mit dem das Schließelement 8 zwischen Offenstellung und Schließstellung bewegbar ist. Dieser ist im Beispiel druckmittelbetrieben ausgeführt, wobei beispielsweise Luft als Druckmittel eingesetzt wird. Eine Antriebsstange 10 durchsetzt den Antrieb 9 und ist mit dem Schließelement 8 verbunden. Ein Kolben 11 ist an der Antriebsstange 10 befestigt und ist mit einem Druckmittel gegen die Kraft einer Feder 12 bewegbar gestaltet.

Das Schalten des Ventils 1 zwischen Offenstellung und Schließstellung mittels des Antriebs 9 ist von einer Ventilsteuereinrichtung 13 bewirkbar. Die Antriebsstange 10 oder ein mit ihr verbundenes Element ist bis in das Innere der Ventilsteuereinrichtung 13 hinein ausgeführt. Ein Positionsgeber 14 ist mit der Antriebsstange 10 ortsfest in Bezug zur Antriebsstange 10 verbunden. Ein Sensor 15 erfasst ein die Lage des Positionsgebers 14 repräsentierendes Signal. Aus diesem Signal sind die Positionen des Schließelements 8 wenigstens in Offenstellung und Schließstellung ermittelbar. Eine Taste 16 oder eine Mehrzahl Tasten ist an der Ventilsteuereinrichtung 13 vorgesehen und ermöglicht die Bedienung der Ventilsteuereinrichtung 13 und des Ventils 1. Die Ventilsteuereinrichtung 13 weist eine erste drahtlose Kommunikationseinrichtung 17 auf, mit der ein Datenaustausch zwischen der Ventilsteuereinrichtung 13 und einem anderen Gerät möglich ist.

Das Ventil 1 ist mit einem optischen Kennzeichen 18 versehen, welches vorteilhaft als alphanumerisches Zeichen oder alphanumerische Zeichenkette ausgeführt ist. Das optische Kennzeichen 18 kann auf den Oberflächen von Ventilgehäuse 3, Ventilsteuereinrichtung 13 oder, wie dargestellt, Antrieb 9 befestigt oder eingearbeitet sein. Das optische Kennzeichen 18 kann vom Hersteller des Ventils 1, beispielsweise in Form einer Seriennummer, oder dem Betreiber des Ventils 1 erstellt sein oder einen Anteil vom Hersteller und einen Anteil vom Betreiber besitzen.

Ein Mobilgerät 2 umfasst eine optische Erfassungseinheit 19 und eine zweite drahtlose Kommunikationseinheit 20. Eine Visualisierungseinrichtung 21 des Mobilgeräts 2 dient der Darstellung von Daten in Form von Zeichen und/oder grafischen Elementen. Weiterhin umfasst das Mobilgerät 2 ein Bedienmittel 22, welches die Auswahl und Steuerung der Funktionen des Mobilgeräts 2 durch einen Benutzer, beispielsweise einem Servicetechniker, erlaubt. Das Mobilgerät 2 besitzt eine Datenbearbeitungseinheit 23, welche insbesondere mit der zweiten drahtlosen Kommunikationseinheit 20 und der optischen Erfassungseinheit 19 wirkverbunden ist. Die Steuerung der Funktionen erfolgt mittels des Bedienmittels 22. Die Anzeige der Daten kann mit der Visualisierungseinrichtung 21 erfolgen.

Eine auslösbare Funktion des Mobilgeräts 2 ist eine mit Hilfe der optischen Erfassungseinheit 19 durchgeführte optische Abtastung A des optischen Kennzeichens 18. Das optische Kennzeichen 18 wird zunächst mittels der optischen Erfassungseinheit 19 erfasst und in der Folge in der Datenbearbeitungseinheit 23 zu einem Kennzeichendatensatz verarbeitet. Dieser kann mittels der Visualisierungseinrichtung 21 angezeigt werden.

Gleichzeitig zur oder zeitlich aufeinanderfolgend auf die optische Abtastung A ist eine drahtlose Datenverbindung D zwischen der erste drahtloser Kommunikationseinheit 17 der Ventilsteuereinrichtung 13 und der zweiten drahtlosen Kommunikationseinheit 20 des Mobilgeräts 2 herstellbar. Die drahtlose Datenverbindung D dient der Übertragung eines Ventildatensatzes von der Ventilsteuereinrichtung 13 auf das Mobilgerät 2. Der Ventildatensatz kann mittels der Visualisierungseinrichtung 21 angezeigt werden.

Die drahtlose Datenverbindung D kann nach dem Standard IEEE 802.15.1 gestaltet sein. Dann ist eine Funktion der Taste 16, dem Benutzer notwendige Dateneingabe zur Herstellung der Verbindung nach dem genannten Standard zu ermöglichen. Ebenso ist das Bedienmittel 22 zur Eingabe der für die Herstellung der Verbindung notwendigen Daten gestaltet.

Die Datenbearbeitungseinheit 23 ist dazu eingerichtet, aus dem Kennzeichendatensatz und dem Ventildatensatz eine Datensatzgruppe zu erzeugen. Die Datensatzgruppe besitzt den Vorteil, dass der aus der Ventilsteuereinrichtung 13 ausgelesene Ventildatensatz eindeutig einem bestimmten Ventil 1 der Prozessanlage zugeordnet ist. Das Mobilgerät 2 kann einen Datenspeicher 24 umfassen, in welchem eine Datensatzgruppe oder mehrere Datensatzgruppen mehrerer Ventile 1 speicherbar sind. Im Mobilgerät 2 können ventiltypbezogene Daten wie Datenblätter und Bedienungshinweise abgelegt sein, aus denen durch Vergleich mit einer Datensatzgruppe zum Ventil 1 passende Daten auswählbar sind. Dies vereinfacht eine bestmögliche Bedienung des Ventils 1.

Visualisierungseinrichtung 21 und Bedienmittel 22 können als berührungsempfindlicher Bildschirm ("touch-screen") ausgeführt sein.

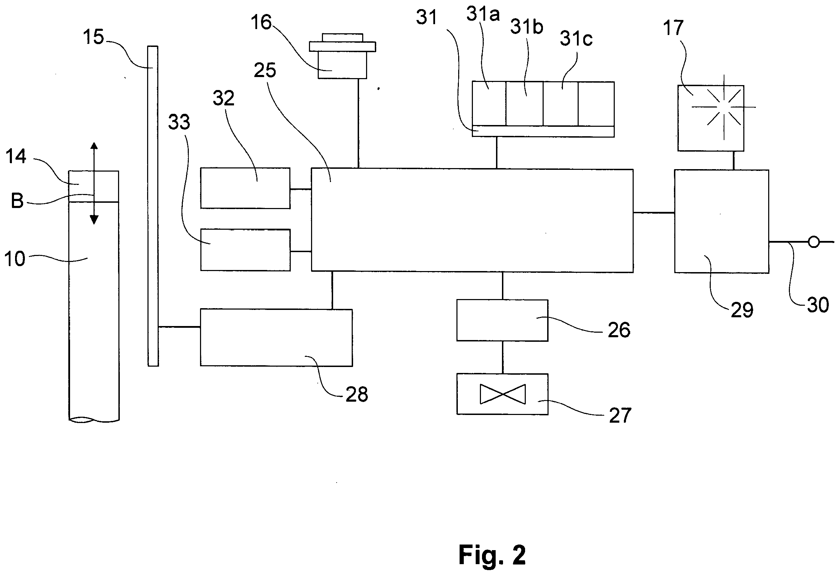

Die **Fig. 2** zeigt in einer schematischen Darstellung Funktionsblöcke der Ventilsteuereinrichtung 13. Kern der Ventilsteuereinrichtung 13 ist eine Verarbeitungseinheit 25, die beispielsweise einen Mikroprozessor umfassen kann. Die Verarbeitungseinheit 25 ist so ausgeführt, dass sie Steuerbefehle empfangen und in der Folge eine Aktion auslösen kann. Hierzu ist die Verarbeitungseinheit 25 über ein Anpassungsmodul 26 mit einem Steuerventil 27 wirkverbunden. Das Anpassungsmodul 26 wandelt die Signalpegel der Verarbeitungseinheit 25 in zur Ansteuerung des Steuerventils 27 geeignete Signalpegel um. Mit dem Steuerventil 27 wird die Druckluftzufuhr zum Antrieb 9 geöffnet oder geschlossen gehalten, womit als eine Aktion eine Bewegung des Kolbens 11 und damit des Schließelements 8 bewirkt wird. Eine andere Aktion ist beispielsweise bei einem Regelventil die Veränderung des Fluiddurchsatzes.

Der an der Antriebsstange 10 befestigte Positionsgeber 14 erzeugt bei seiner Bewegung entlang der Bewegungsrichtung B im Sensor 15 ein die Stellung relativ zum Sensor repräsentierendes Signal. Dieses Signal wird von einer Sensorschaltung 28 in ein durch die Verarbeitungseinheit 25 verarbeitbares Signal umgewandelt.

Die Verarbeitungseinheit 25 ist mit einem Kommunikationsmodul 29 verbunden. Dieses ist mit einer Steuerleitung 30 verbindbar und mit der ersten drahtlosen Kommunikationseinheit 17 verbunden. Das Kommunikationsmodul 29 ist so gestaltet, dass die über das erste drahtlose Kommunikationsmodul 17 und/oder die Steuerleitung 30 eingehenden Signale, beispielsweise Steuerbefehle und Datenabfragen, an die Signalstruktur der Verarbeitungseinheit 25 angepasst werden. Weiterhin ist das Kommunikationsmodul 29 für die Umsetzung der Signale der Verarbeitungseinheit 25 zur Kommunikation mittels erster drahtloser Kommunikationseinheit 17 oder Steuerleitung 30 angepasst.

Die Ventilsteuereinrichtung 13 kann einen mit der Verarbeitungseinheit 25 verbundenen Speicher 31 umfassen. Der Speicher 31 kann einen Steuerbefehlspeicher 31a besitzen, in welchem an die Ventilsteuereinrichtung 13 übertragene Steuerbefehle abgelegt und von der Verarbeitungseinheit 25 abgerufen werden. Aus den Daten des Sensors 15 ergeben sich Betriebszustandsdaten, die beispielsweise die Offenstellung und/oder Schließstellung beziehungsweise Zwischenstellungen des Ventils 1 darstellen. Zur Speicherung dieser Betriebszustandsdaten kann ein Betriebszustandsspeicher 31b vorhanden sein. Je nach Art und Umfang der Sensorik können umfassend Betriebszustandsdaten ermittelt und im Betriebszustandsspeicher 31b zur weiteren Verwendung abgelegt werden.

Die Ventilsteuereinrichtung 13 kann ein mit der Verarbeitungseinheit 25 verbundenes Fehlererkennungsmittel 32 umfassen. Das Fehlererkennungsmittel 32 ist dazu ausgelegt, sich aus den Daten, insbesondere den Sensordaten und Steuerbefehlen, ergebende Fehler zu erkennen. Das Fehlererkennungsmittel 32 oder die Verarbeitungseinheit 25 können Fehlerdaten erzeugen, die in einem Fehlerspeicher 31c ablegbar sind. Dies erleichtert die Fehlerdiagnose durch einen Servicetechniker.

Eine Zeitsignaleinheit 33, die zum Erzeugen eines relativen, vorzugsweise eines absoluten, Zeitsignals eingerichtet ist, ist mit der Verarbeitungseinheit 25 verbunden. Die Verarbeitungseinheit ist ausgelegt, den Datensätzen wie beispielsweise den Betriebszustandsdaten oder den Fehlerdaten ein Zeitsignal hinzuzufügen.

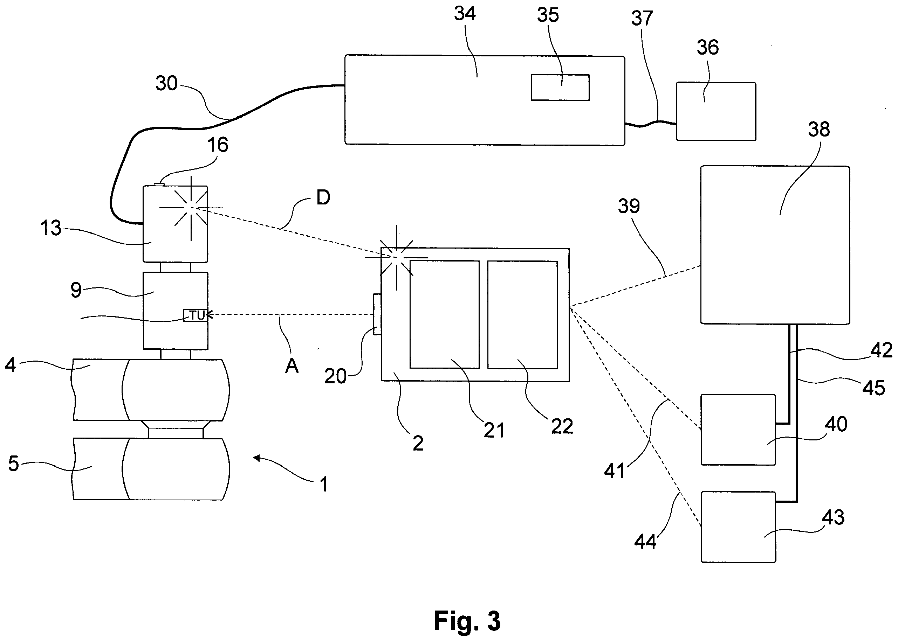

Eine nicht maßstabsgetreue, schematische Darstellung zeigt in **Fig. 3** eine Weiterbildung der Anordnung aus **Fig. 1****.** Die Anordnung umfasst eine Anlagensteuerung 34, die mittels der Steuerleitung 30 mit der Ventilsteuereinrichtung 13 verbunden ist. Die Anlagensteuerung 34 dient der zum gewünschten Prozessablauf notwendigen Steuerung des Ventils 1, insbesondere der Offenstellung und Schließstellung des Ventils 1. Hierzu werden Steuerbefehle über die Steuerleitung 30 von der Anlagensteuerung 34 an die Ventilsteuereinrichtung 13 übermittelt. Die Anlagensteuerung 34 weist zur Eingabe der Abläufe und Steuerbefehle ein Bedienelement 35 auf. Alternativ oder zusätzlich kann ein Programmiergerät 36 zeitweise oder dauerhaft mittels einer Programmierverbindung 37 mit der Anlagensteuerung 34 verbunden sein. Die Anlagensteuerung 34 kann als speicherprogrammiere Steuerung (SPS) ausgeführt sein.

Eine Bereitstellungseinrichtung 38 ist mit dem Mobilgerät 2 zur Ausbildung einer kurzzeitigen oder dauerhaften Allgemeindatenverbindung 39 verbindbar. Die Bereitstellungseinrichtung 38 kann in der Nähe der Prozessanlage stehen. Vorteilhaft ist sie beim Hersteller des Ventils 1 angeordnet, da auf diese Weise an einer zentralen Stelle aktuelle, abrufbare und ventiltypbezogene Daten vorrätig gehalten werden können, beispielsweise Datenblätter, Servicefilme und Bedienungsanleitungen. Die Allgemeindatenverbindung 39 kann als kabellose Netzwerkverbindung oder vorteilhaft als Mobilfunkdatenverbindung ausgeführt sein. Letztere ist insbesondere dann von Vorteil, wenn die Bereitstellungseinrichtung 38 beim Hersteller des Ventils 1 angeordnet ist. Die Bereitstellungseinrichtung 38 kann ein Bestellmittel umfassen, in dem mit Hilfe der Datensatzgruppe ein Bestellvorgang durchführbar ist.

Die Allgemeindatenverbindung 39 kann dazu genutzt werden, ventiltypbezogene Daten auf das Mobilgerät 2 zu übermitteln und/oder auf dem Mobilgerät 2 bereits vorhandene ventiltypbezogene Daten zu aktualisieren. Beide Möglichkeiten erleichtern eine bestmögliche Bedienung des Ventils 1.

In einer Weiterbildung umfasst die Anordnung eine Diagnoseeinrichtung 40, die als einzelnes Gerät oder als Teil der Bereitstellungseinrichtung 38 ausgeführt sein kann. Mittels einer zumindest zeitweilig herstellbaren unmittelbaren oder mittelbaren Diagnosedatenverbindung 41 zwischen Mobilgerät 2 und Diagnoseeinrichtung 40 ist insbesondere eine Datensatzgruppe, welche Fehlerdaten beinhaltet, vom Mobilgerät 2 an die Diagnoseeinrichtung 40 übertragbar. Zwischen der Bereitstellungseinrichtung 38 und der Diagnoseeinrichtung 40 kann eine erste externe Datenverbindung 42 bestehen, mittels welcher ventiltypbezogene Daten von der Bereitstellungseinrichtung 38 auf die Diagnoseeinrichtung 40 übertragen werden können. Die erste externe Datenverbindung 42 kann auch der Herstellung einer mittelbaren Diagnosedatenverbindung 41 dienen.

In einer anderen Weiterbildung umfasst die Anordnung eine Auswerteeinheit 43, die ebenfalls als einzelnes Gerät oder als Teil einer der anderen Komponenten ausgeführt sein kann, beispielsweise als Teil der Anlagensteuerung 34, der Bereitstellungseinrichtung 38 oder der Diagnoseeinrichtung 40. Eine Betriebsdatenverbindung 44 zwischen Mobilgerät 2 und Auswerteeinheit 43 ist zumindest zweitweise mittelbar oder unmittelbar herstellbar. Über die Betriebsdatenverbindung 44 ist wenigstens eine Datensatzgruppe vom Mobilgerät 2 an die Auswerteeinheit 43 übertragbar. Die Auswerteeinheit 43 ist eingerichtet, Betriebsdaten zu speichern und zu verarbeiten, beispielsweise gesammelte Betriebszustände von unterschiedlichen Zeitpunkten miteinander hinsichtlich Veränderungen zu vergleichen und Lebensdauerdaten zu erzeugen. Zwischen der Bereitstellungseinrichtung 38 und der Auswerteeinheit 43 kann eine zweite externe Datenverbindung 45 bestehen, mittels welcher ventiltypbezogene Daten von der Bereitstellungseinrichtung 38 auf die Auswerteeinheit 43 übertragen werden können. Die zweite externe Datenverbindung 45 kann auch der Herstellung einer mittelbaren Betriebsdatenverbindung 44 dienen.

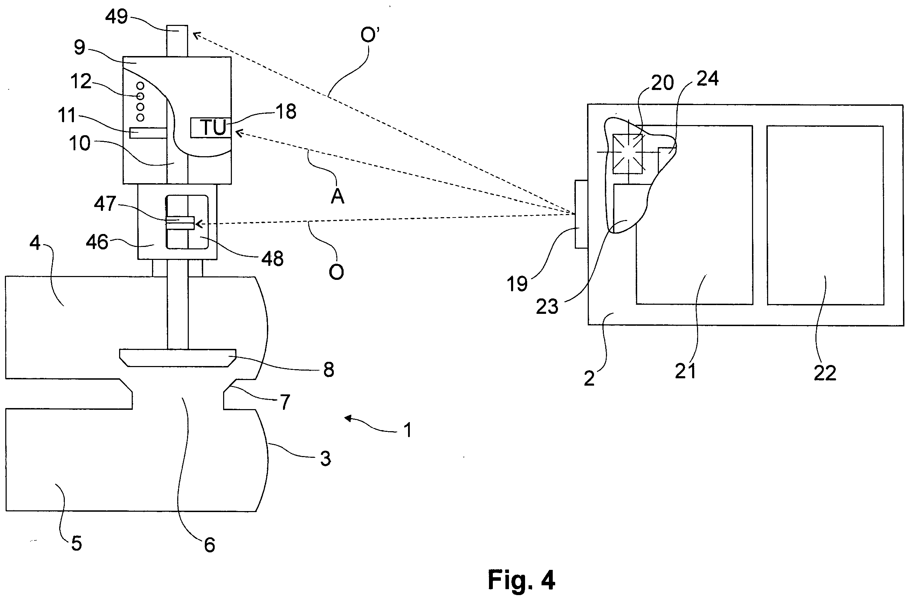

In **Fig. 4** ist eine Anordnung mit Ventil 1 und Mobilgerät 2 gezeigt, in der auf eine Ventilsteuereinrichtung 13 verzichtet wird. Zwischen Ventilgehäuse 3 und Antrieb 9 ist ein Distanzstück 46 vorgesehen. In diesem kann sich eine Kupplung 47 befinden, mit welcher zwei Teile der Antriebsstange 10 miteinander verbunden sind. Bei einer einteiligen Antriebsstange 10 alternativ oder bei einer mehrteiligen Antriebsstange 10 zusätzlich kann eine sichtbare Markierung an der Antriebsstange 10 angebracht sein. Markierung oder Kupplung 47 sind mittels eines im Distanzstück 46 vorgesehenen Sichtfensters 48 von außerhalb des Distanzstückes 46 sichtbar. Alternativ oder zusätzlich ragt aus dem Antrieb 9 ein ebenfalls sichtbares Stangenende 49 heraus. Dies erlaubt dem Benutzer, die Funktion des Ventils, beispielsweise die Schaltstellung, zu erkennen und mittels der optischen Erfassungseinheit 19 des Mobilgeräts 2 aufzuzeichnen. Dabei kann eine Bildaufzeichnung O der Stellung der Kupplung 47 und/oder eine alternative Bildaufzeichnung O' des Stangenendes 49 erfolgen. Bildaufzeichnung O und alternative Bildaufzeichnung O' können ein Bild, eine Bildfolge oder ein Video sein. Die Bildaufzeichnung O ist auch dann möglich, wenn das Distanzstück 46 mit Sichtfenster 48, durch welches die Kupplung 47 oder eine Markierung auf der Ventilstange 10 mit einer Ventilsteuereinrichtung 13 kombiniert wird.

Der Antrieb ist gemäß **Fig. 1** bis **Fig. 4** als druckmittelbetrieben, beispielsweise pneumatisch, beschrieben. Alternativ kann eine elektromotorisch getriebene Ansteuerung zum Einsatz kommen. In diesem Fall entfallen Kolben 11 und Feder 12. Das Steuerventil 27 wird durch eine von der Verarbeitungseinheit 25 angesteuerte Motoransteuerung ersetzt. Der von der Motoransteuerung angesteuerte Elektromotor treibt direkt oder über ein Getriebe die Antriebsstange 10 und damit das Schließelement 8.

Das Mobilgerät 2 kann eine Mikroprozessoranordnung umfassen, die zur Handhabung des Kennzeichendatensatzes programmiert ist. Hierzu können die Zuordnung des Kennzeichendatensatzes zu dem Ventildatensatz, das Bewirken der Datenverbindungen D und 39 und die Vorbereitung der auf der Visualisierungseinrichtung 21 anzuzeigenden Daten gehören. Weiterhin kann die Programmierung die Durchführung von Bestellvorgängen, die Verarbeitung des Antwortdatensatzes und die Handhabung, beispielsweise Visualisierung mittels der Visualisierungseinrichtung 21,von Fehlerdaten, Betriebszustandsdaten und das Ermitteln der später beschriebenen, geänderten Steuerungsdaten zur Ansteuerung des Ventils 1 umfassen.

Die Anordnung nach **Fig. 1** bis **Fig. 3** ist zum Durchführen eines Verfahrens geeignet, in welchem zunächst mit der optischen Erfassungseinheit 19 das optische Kennzeichen 18 auf dem Ventil 1 erfasst wird. Die Datenbearbeitungseinheit 23 wertet das erfasste Bild aus und wandelt er in einen Kennzeichendatensatz um, welcher das optische Kennzeichen repräsentiert. Die Auswertung kann vorteilhaft eine Texterkennung sein, welche eine alphanumerische Zeichenkette auf dem Ventil1 in eine alphanumerische Zeichenkette im Kennzeichendatensatz umwandelt. Weiterhin wird in dem Verfahren eine drahtlose Verbindung D zwischen Ventilsteuereinrichtung 13 und Mobilgerät 2 hergestellt und ein Ventildatensatz von der Ventilsteuereinrichtung 13 an das Mobilgerät 2 übertragen. Die Verarbeitungseinheit erzeugt dann eine Datensatzgruppe, welche den Kennzeichendatensatz und den Ventildatensatz umfasst.

Das Verfahren kann mittels einer Anordnung gemäß **Fig. 3** vorteilhaft weitergebildet werden.

Soweit eine Bereitstellungseinrichtung 38 in der Anordnung vorhanden ist, kann das Mobilgerät 2 mit dieser verbunden werden, beispielsweise über Mobilfunk. Die Datensatzgruppe, welche den Kennzeichendatensatz und den Ventildatensatz umfasst, wird an die Bereitstellungseinrichtung 38 gesendet und dort verarbeitet. Die Verarbeitung kann, wenn das optischen Kennzeichen 18 eine Seriennummer ist, die Abfrage einer Datenbank sein, in welcher Ventiltypdaten Seriennummern zugeordnet sind. Nach der Verarbeitung wird ein Antwortdatensatz erzeugt und an das Mobilgerät 2 gesendet. Dieser Antwortdatensatz kann beispielsweise eine Bedienungsanleitung, ein Datenblatt oder eine Ersatzteilaufstellung sein. Der Antwortdatensatz kann eine Auswertung aus der Diagnoseeinrichtung 40 und/oder der Auswerteeinheit 43 beinhalten.

Besitzt die Ventilsteuereinrichtung 13 eine Zeitsignaleinheit 33, kann ein Erfassungszeitraum festgelegt werden, in welchem Betriebszustände in der Ventilsteuereinrichtung 13 erfasst werden. Diese erfassten Betriebszustände können dann mit dem Mobilgerät 2 ausgelesen werden. In einer vorteilhaften Weiterbildung wird jedem erfassten Betriebszustand ein Zeitsignal zugeordnet, beispielsweise eine absolute Zeitmarke. Die Erfassung von Betriebszuständen ermöglicht eine gute Kontrolle der Funktion des Ventils 1.

Ist eine Auswerteeinheit 43 vorgesehen, kann das Mobilgerät 2 dazu genutzt werden, Betriebszustände aus der Ventilsteuereinrichtung 13 auszulesen und an die Auswerteeinheit 43 zu übertragen. Dies ermöglicht, in der Auswerteeinheit Betriebszustände hinsichtlich der Funktion der Ventils 1 auszuwerten. Ist die Auswerteeinheit 43 beispielsweise beim Benutzer des Ventils 1 angeordnet, kann dieser beispielsweise Funktionsabweichungen frühzeitig feststellen und gegebenenfalls Ersatzteilbedarf feststellen. Ist die Auswerteeinheit 43 beim Hersteller des Ventils 1 vorgesehen, kann aus den Betriebszuständen Verbesserungsbedarf am Ventil 1 festgestellt werden.

Gemäß der Erfindung werden mit dem Mobilgerät 2 in der Ventilsteuereinrichtung 13 erfasste Fehlerdaten ausgelesen. Damit kann beispielsweise ein Servicetechniker unmittelbar in der Nähe des Ventils 1 Fehlfunktionen ermitteln und das Ventil 1 prüfen. Der Servicetechniker kann auf diese Weise Fehler an den Hersteller melden und von diesem Unterstützung erfahren. Die Fehlersuche in einer Prozessanlage wird so erheblich vereinfacht und beschleunigt. Die Ventilsteuereinrichtung 13 umfasst, wie an Fig. 2 erläutert, einen Fehlerspeicher 31c, so dass die Fehlersuche vorteilhaft zeitlich unabhängig stattfinden kann.

Gemäß der Erfindung ist eine Diagnoseeinrichtung 40 vorhanden ist. Diese kann beim Benutzer und Betreiber der Prozessanlage oder beim Hersteller des Ventils 1 angeordnet sein. Das Verfahren sieht dann vor, Fehlerdaten von der Ventilsteuereinrichtung 13 auf das Mobilgerät 2 zu übertragen und von diesem an die Diagnoseeinrichtung 40 zu übertragen. Diese Diagnoseeinrichtung 40 kann eine Datenbank mit gesammelten Fehlerdaten umfassen, so dass die Fehlersuche am Ventil 1 wesentlich beschleunigt wird. Die Diagnoseeinrichtung 40 erlaubt zudem die kontinuierliche Verbesserung des Ventiltyps, wenn der Hersteller Zugriff auf diese Daten hat. Eine andere Ausführung des Verfahrens sieht vor, einen Steuerungsdatensatz mit dem Mobilgerät 2 aus der Ventilsteuereinrichtung 13 auszulesen. Im Mobilgerät 2 wird der Steuerungsdatensatz mit der Datensatzgruppe zusammen verarbeitet und geänderte Steuerungsdaten erzeugt. Im Mobilgerät 2 werden während der Verarbeitung die in der Ventilsteuereinrichtung 13 hinterlegten Steuerungsdaten mit den aus der Datensatzgruppe hervorgehenden Ventildaten verglichen und hinsichtlich Verbesserungsmöglichkeiten geprüft. Ergeben sich Verbesserungsmöglichkeiten, sind diese in den geänderten Steuerungsdaten enthalten. Die geänderten Steuerungsdaten stehen zur Weiterverarbeitung zur Verfügung, beispielsweise können sie mittels der drahtlosen Datenverbindung D an die Ventilsteuereinrichtung 13 übermittelt werden. Verbesserungsmöglichkeiten können sich beispielsweise auf Ventilschaltzeiten oder bei einem Regelventil auf die Drosseleinstellung beziehen.

Vorteilhaft ist eine Weiterverarbeitung der geänderten Steuerungsdaten mittels der nach **Fig. 3** in der Anordnung vorgesehenen Anlagensteuerung 34. In diesem Fall werden die geänderten Steuerungsdaten am Mobilgerät 2, beispielsweise auf der Visualisierungseinrichtung 21, angezeigt. Der Benutzer, beispielsweise ein Servicetechniker, kann die geänderten Steuerungsdaten dann an der Anlagensteuerung 34 eingeben, um die Ansteuerung des Ventils 1 im Prozess zu verbessern. Die Eingabe kann am Bedienelement 35 der Anlagensteuerung 34 erfolgen oder an dem Programmiergerät 36. Vorteilhaft ist ein direkter Eingriff in die Anlagensteuerung in Form einer Datenverbindung zwischen Mobilgerät und Anlagensteuerung nicht notwendig.

Die an Hand **Fig. 1** bis **Fig. 4** beschriebenen Anordnungen mit dem Ventil 1, welches das optische Kennzeichen 18 umfasst, und dem Mobilgerät 2, welches die optische Erfassungseinheit 19 und eine Visualisierungseinrichtung 21 umfasst, sind mit einem Verfahren betreibbar, in welchem zunächst das optische Kennzeichen 18 mit der optischen Erfassungseinheit 19 durch eine optische Abtastung A erfasst und nachfolgend dem optischen Kennzeichen 19 zugeordnete Daten auf der Visualisierungseinrichtung 21 angezeigt werden. Die Zuordnung der Daten erfolgt im Mobilgerät, die Daten können im Mobilgerät 2 abgelegt sein oder, soweit diese vorhanden ist, von der Bereitstellungseinrichtung 38 mittels einer Allgemeindatenverbindung 39 abgerufen werden.

**Fig. 4** erlaubt ein Verfahren zum Betreiben einer Anordnung mit dem Ventil 1, welches das optische Kennzeichen 18 umfasst, und dem Mobilgerät 2, welches die optische Erfassungseinheit 19 umfasst, in welchem das optische Kennzeichen 18 mit der optischen Erfassungseinheit 19 durch eine optische Abtastung A und die Funktion des Ventils durch eine Bildaufzeichnung O oder alternative Bildaufzeichnung O' erfasst und einander zugeordnet werden. Dieses Verfahren ist auf die Anordnungen nach **Fig. 1** bis **Fig. 3** anwendbar, wenn diese von außen sichtbare und die Funktion des Ventils 1, insbesondere der Schaltstellungen seines Schließelements 8, repräsentierende Markierungen umfasst. Mit diesem Verfahren kann der Benutzer die Funktion des Ventils 1 aufzeichnen, beispielsweise in einer Bildfolge oder einem Video, und dies dem optischen Kennzeichen, beispielsweise der Seriennummer, eindeutig zuordnen. Diese Daten können dann zur Prüfung der Ventilfunktion genutzt werden und beispielsweise an den Hersteller übermittelt werden.

### Bezugszeichenliste

- 1: Ventil
- 2: Mobilgerät
- 3: Ventilgehäuse
- 4: erster Rohrleitungsanschluss
- 5: zweiter Rohrleitungsanschluss
- 6: Durchtrittsöffnung
- 7: Ventilsitz
- 8: Schließelement
- 9: Antrieb
- 10: Antriebsstange
- 11: Kolben
- 12: Feder
- 13: Ventilsteuereinrichtung
- 14: Positionsgeber
- 15: Sensor
- 16: Taste
- 17: erste drahtlose Kommunikationseinheit
- 18: optisches Kennzeichen
- 19: optische Erfassungseinheit
- 20: zweite drahtlose Kommunikationseinheit
- 21: Visualisierungseinrichtung
- 22: Bedienmittel
- 23: Datenbearbeitungseinheit
- 24: Datenspeicher
- 25: Verarbeitungseinheit
- 26: Anpassungsmodul
- 27: Steuerventil
- 28: Sensorschaltung
- 29: Kommunikationsmodul
- 30: Steuerleitung
- 31: Speicher
- 31a: Steuerbefehlspeicher
- 31b: Betriebszustandsspeicher
- 31c: Fehlerspeicher
- 32: Fehlererkennungsmittel
- 33: Zeitsignaleinheit
- 34: Anlagensteuerung
- 35: Bedienelement
- 36: Programmiergerät
- 37: Programmierverbindung
- 38: Bereitstellungseinrichtung
- 39: Allgemeindatenverbindung
- 40: Diagnoseeinrichtung
- 41: Diagnosedatenverbindung
- 42: erste externe Datenverbindung
- 43: Auswerteeinheit
- 44: Betriebsdatenverbindung
- 45: zweite externe Datenverbindung
- 46: Distanzstück
- 47: Kupplung
- 48: Sichtfenster
- 49: Stangenende
- A: Optische Abtastung
- B: Bewegungsrichtung
- D: Drahtlose Datenverbindung
- O: Bildaufzeichnung
- O': alternative Bildaufzeichnung

## Patentansprüche

1. Anordnung
mit einem Ventil (1) einer Prozessanlage mit unterschiedlichen Typen von Ventilen,
wobei das Ventil (1) eine Ventilsteuereinrichtung (13), aus der ein eindeutig einem bestimmten Ventil der Prozessanlage zugeordneter Ventildatensatz auslesbar ist, und ein optisches Kennzeichen (18) umfasst,
und mit einem Mobilgerät (2), welches eine optische Erfassungseinheit (19) zum Erfassen des optischen Kennzeichens (18) umfasst und zur Erzeugung eines Kennzeichendatensatzes aus den von der optischen Erfassungseinheit (19) erfassten Bilddaten eingerichtet ist,
und die Ventilsteuereinrichtung (13) eine erste drahtlose Kommunikationseinheit (17) umfasst, das Mobilgerät (2) eine zweite drahtlose Kommunikationseinheit (20) umfasst und das Mobilgerät (2) zum Erzeugen einer Datensatzgruppe, die den Kennzeichendatensatz und den Ventildatensatz umfasst, eingerichtet ist,
**dadurch gekennzeichnet, dass**
die erste drahtlose Kommunikationseinheit (17) mit der zweiten drahtlosen Kommunikationseinheit (20) zum Übertragen des Ventildatensatzes an das Mobilgerät (2) verbindbar ist,
das Ventil (1) einen Sensor (15) und die Ventilsteuereinrichtung (13) eine Verarbeitungseinheit (25) zum Erfassen eines mit dem Sensor (15) ermittelten Betriebszustandes und einen Speicher (31) zum Speichern eines den Betriebszustand repräsentierenden und in den Ventildatensatz einbindbaren Betriebsdatensatz umfasst,
die Ventilsteuereinrichtung (13) ein Fehlererkennungsmittel (32) umfasst
und Fehlerdaten im Ventildatensatz in einem Fehlerspeicher (31c) der Ventilsteuereinrichtung ablegbar
sind,
und **gekennzeichnet durch** eine zur Verarbeitung der Fehlerdaten eingerichtete Diagnoseeinrichtung (40), wobei das Mobilgerät (2) eingerichtet ist, den erfassten Betriebszustand auszulesen, die Fehlerdaten abzurufen und an die Diagnoseeinrichtung zu übermitteln.

2. Anordnung nach Anspruch 1, **gekennzeichnet durch** eine Bereitstellungseinrichtung (38), mit der das Mobilgerät (2) mittelbar oder unmittelbar verbindbar ist und welche zum Empfangen der Datensatzgruppe und zum Senden eines Antwortdatensatzes eingerichtet ist.

3. Anordnung nach Anspruch 2, **dadurch gekennzeichnet, dass** die Ventilsteuereinrichtung (13) eine Zeitsignaleinheit (33) aufweist und mit der Zeitsignaleinheit (33) erzeugte Zeitdaten dem Betriebsdatensatz zugeordnet sind.

4. Anordnung nach einem der vorhergehenden Ansprüche, **dadurch gekennzeichnet, dass** eine Anlagensteuerung (34) mit der Ventilsteuereinrichtung (13) zur Steuerung der Schaltzustände des Ventils (1) verbunden ist.

5. Anordnung nach Anspruch 4, **dadurch gekennzeichnet, dass** die Anlagensteuerung (34) ein Bedienelement (35) zum Erfassen wenigstens eines Steuerungsparameters umfasst.

6. Anordnung nach Anspruch 4 oder 5, **dadurch gekennzeichnet, dass** das Mobilgerät (2) eine Visualisierungseinrichtung (21) umfasst, in der Steuerungsparameter angezeigt werden.

7. Anordnung nach einem der vorhergehenden Ansprüche, **dadurch gekennzeichnet, dass** das optische Kennzeichen (18) eine alphanumerische Zeichenkette umfasst.

8. Anordnung nach einem der vorhergehenden Ansprüche, **dadurch gekennzeichnet, dass** erste drahtlose Kommunikationseinheit (17) und zweite drahtlose Kommunikationseinheit (20) jeweils ein Funkmodul umfassen.

9. Verfahren zum Betreiben einer Anordnung mit einem Ventil (1) einer Prozessanlage mit unterschiedlichen Typen von Ventilen, wobei das Ventil (1) ein optisches Kennzeichen (18) und eine Ventilsteuereinrichtung (13), aus der ein eindeutig einem bestimmten Ventil der Prozessanlage zugeordneter Ventildatensatz auslesbar ist, umfasst, und einem Mobilgerät (2), welches eine optische Erfassungseinheit (19) umfasst, wobei mit der optischen Erfassungseinheit (19) das optische Kennzeichen (18) erfasst und in einen Kennzeichendatensatz umgewandelt wird, und im Mobilgerät (2) eine Datensatzgruppe erzeugt wird, welche den Kennzeichendatensatz und den Ventildatensatz beinhaltet, **dadurch gekennzeichnet, dass** eine drahtlose Verbindung (D) zwischen der Ventilsteuereinrichtung (13) und dem Mobilgerät (2) hergestellt und der Ventildatensatz von der Ventilsteuereinrichtung (13) an das Mobilgerät (2) übertragen wird, und dass ein Erfassungszeitraum festgelegt wird, in welchem Betriebszustände in der Ventilsteuereinrichtung (13) erfasst werden, wobei die Betriebszustände mit einem Sensor (15) des Ventils ermittelt sind und ein den Betriebszustände repräsentierenden und in den Ventildatensatz einbindbarer Betriebsdatensatz in einem Speicher der Ventileinrichtung gespeichert wird, und dass die erfassten Betriebszustände mit dem Mobilgerät (2) ausgelesen werden und dass in der Ventilsteuereinrichtung (13) Fehlerdaten erfasst , in einem Fehlerspeicher (31c) der Ventilsteuereinrichtung gespeichert und mit dem Mobilgerät (2) abgerufen werden und dass Fehlerdaten auf das Mobilgerät (2) übertragen und von diesem an eine Diagnoseeinrichtung (40) übermittelt werden.

10. Verfahren nach Anspruch 9, **dadurch gekennzeichnet, dass** das Mobilgerät (2) mit einer Bereitstellungseinrichtung (38) verbunden, die Datensatzgruppe gesendet und ein von der Bereitstellungseinrichtung (38) erzeugter Antwortdatensatz empfangen wird.

11. Verfahren nach Anspruch 9 oder 10, **dadurch gekennzeichnet, dass** die Betriebszustände mit dem Mobilgerät (2) ausgelesen und an eine Auswerteeinheit (45) übertragen werden.

12. Verfahren nach einem der Ansprüche 9 bis 11, **dadurch gekennzeichnet, dass** ein Steuerungsdatensatz mit dem Mobilgerät (2) aus der Ventilsteuereinrichtung (13) ausgelesen und im Mobilgerät (2) mit der Datensatzgruppe verarbeitet wird und geänderte Steuerungsdaten erzeugt werden.

13. Verfahren nach Anspruch 12, **dadurch gekennzeichnet, dass** die geänderten Steuerungsdaten am Mobilgerät (2) angezeigt und von einem Benutzer in eine mit der Ventilsteuereinrichtung (13) verbundenen Anlagensteuerung (34) eingegeben werden.

14. Verfahren nach Anspruch 9, wobei das optische Kennzeichen (18) mit der optischen Erfassungseinheit (19) durch eine optische Abtastung (A) erfasst wird, **dadurch gekennzeichnet, dass** die Funktion des Ventils durch eine Bildaufzeichnung (O, O') von außen sichtbarer und die Funktion des Ventils (1), insbesondere der Schaltstellungen seines Schließelements (8), repräsentierender Markierungen erfasst und das optische Kennzeichen (18) und die Bildaufzeichnung (O, O') einander zugeordnet werden.

## Claims

1. Arrangement
comprising a valve (1) of a process plant having different types of valves, wherein the valve (1) comprises a valve control device (13), from which a valve data set allocated uniquely to a specific valve of the process plant can be read out, and an optical label (18),
and comprising a mobile device (2) which comprises an optical detection unit (19) for detecting the optical label (18) and is configured to generate a label data set from the image data detected by the optical detection unit (19),
and the valve control device (13) comprises a first wireless communication unit (17), the mobile device (2) comprises a second wireless communication unit (20) and the mobile device (2) is configured to generate a data set group which comprises the label data set and the valve data set, **characterised in that**
the first wireless communication unit (17) can be connected to the second wireless communication unit (20) for transmitting the valve data set to the mobile device (2),
the valve (1) comprises a sensor (15) and the valve control device (13) comprises a processing unit (25) for detecting an operation state determined with the sensor (15) and comprises a memory (31) for storing an operation data set which represents the operation state and can be incorporated into the valve data set,
the valve control device (13) comprises an error recognition means (32) and error data can be stored in the valve data set in an error memory (31c) of the valve control device,
and **characterised by** a diagnostic device (40) which is configured to process the error data, wherein the mobile device (2) is configured to read out the detected operation state, retrieve the error data and communicate same to the diagnostic device.

2. Arrangement as claimed in claim 1, **characterised by** a provisioning device (38), to which the mobile device (2) can be indirectly or directly connected and which is configured to receive the data set group and send the response data set.

3. Arrangement as claimed in claim 2, **characterised in that** the valve control device (13) has a time signal unit (33) and time data generated with the time signal unit (33) are allocated to the operation data set.

4. Arrangement as claimed in any one of the preceding claims, **characterised in that** a plant controller (34) is connected to the valve control device (13) for controlling the switching states of the valve (1).

5. Arrangement as claimed in claim 4, **characterised in that** the plant controller (34) comprises an operating element (35) for detecting at least one control parameter.

6. Arrangement as claimed in claim 4 or 5, **characterised in that** the mobile device (2) comprises a visualisation device (21), in which control parameters are displayed.

7. Arrangement as claimed in any one of the preceding claims, **characterised in that** the optical label (18) comprises an alphanumerical character string.

8. Arrangement as claimed in any one of the preceding claims, **characterised in that** the first wireless communication unit (17) and the second wireless communication unit (20) each comprise a radio module.

9. Method for operating an arrangement comprising a valve (1) of a process plant having different types of valves, wherein the valve (1) comprises an optical label (18) and a valve control device (13), from which a valve data set allocated uniquely to a specific valve of the process plant can be read out, and a mobile device (2) which comprises an optical detection unit (19), wherein by means of the optical detection unit (19) the optical label (18) is detected and converted into a label data set, and in the mobile device (2) a data set group is generated which includes the label data set and the valve data set, **characterised in that** a wireless connection (D) is established between the valve control device (13) and the mobile device (2) and the valve data set is transmitted by the valve control device (13) to the mobile device (2), and **in that** a detection time period is set, in which operation states are detected in the valve control device (13), wherein the operation states are determined with a sensor (15) of the valve and an operation data set which represents the operation states and can be incorporated into the valve data set is stored in a memory of the valve device, and **in that** the detected operation states are read out with the mobile device (2) and **in that** in the valve control device (13) error data are detected, stored in an error memory (31c) of the valve control device and retrieved with the mobile device (2), and **in that** error data are transmitted to the mobile device (2) and are communicated thereby to a diagnostic device (40).

10. Method as claimed in claim 9, **characterised in that** the mobile device (2) is connected to a provisioning device (38), the data set group is sent and a response data set generated by the provisioning device (38) is received.

11. Method as claimed in claim 9 or 10, **characterised in that** the operation states are read out with the mobile device (2) and are transmitted to an evaluation unit (45).

12. Method as claimed in any one of claims 9 to 11, **characterised in that** a controller data set is read out with the mobile device (2) from the valve control device (13) and is processed in the mobile device (2) with the data set group and changed controller data are generated.

13. Method as claimed in claim 12, **characterised in that** the changed controller data are displayed on the mobile device (2) and are input by a user into a plant controller (34) connected to the valve control device (13).

14. Method as claimed in claim 9, wherein the optical label (18) is detected with the optical detection unit (19) by means of an optical scan (A), **characterised in that** the function of the valve is detected by an image recording (O, O') of externally visible markings representing the function of the valve (1), in particular the switching positions of the closing element (8) thereof, and the optical label (18) and the image recording (O, O') are allocated to one another.

## Revendications

1. Ensemble
avec une soupape (1) d'une installation de processus avec différents types de soupapes,
dans lequel la soupape (1) comprend un dispositif de commande de soupape (13), depuis lequel un jeu de données de soupape clairement associé à une soupape définie de l'installation de processus peut être lu, et un identifiant optique (18),
et avec un appareil mobile (2), lequel comprend une unité de détection optique (19) pour détecter l'identifiant optique (18) et est mis au point pour générer un jeu de données d'identifiant à partir des données d'image détectées par l'unité de détection optique (19),
et le dispositif de commande de soupape (13) comprend une première unité de communication sans fil (17), l'appareil mobile (2) comprend une deuxième unité de communication sans fil (20) et l'appareil mobile (2) est mis au point pour générer un groupe de jeux de données, qui comprend le jeu de données d'identifiant et le jeu de données de soupape,
**caractérisé en ce que**
la première unité de communication sans fil (17) peut être reliée à la deuxième unité de communication sans fil (20) pour transmettre le jeu de données de soupape à l'appareil mobile (2),
la soupape (1) comprend un capteur (15) et le dispositif de commande de soupape (13) comprend une unité de traitement (25) pour détecter un état de fonctionnement déterminé avec le capteur (15) et un système de stockage (31) pour stocker un jeu de données de fonctionnement représentant l'état de fonctionnement et pouvant être intégré dans le jeu de données de soupape,
le dispositif de commande de soupape (13) comprend un moyen d'identification d'erreur (32) et des données d'erreur dans le jeu de données de soupape peuvent être déposées dans un système de stockage d'erreurs (31c) du dispositif de commande de soupape,
et **caractérisé par** un dispositif de diagnostic (40) mis au point pour le traitement des données d'erreur, dans lequel l'appareil mobile (2) est mis au point pour lire l'état de fonctionnement détecté, pour consulter les données d'erreur et les transmettre au dispositif de diagnostic.

2. Ensemble selon la revendication 1, **caractérisé par** un dispositif de fourniture (38), auquel l'appareil mobile (2) peut être relié indirectement ou directement et lequel est mis au point pour recevoir le groupe de jeux de données et pour envoyer un jeu de données de réponse.

3. Ensemble selon la revendication 2, **caractérisé en ce que** le dispositif de commande de soupape (13) présente une unité de signaux temporels (33) et des données temporelles générées avec l'unité de signaux temporels (33) sont associées au jeu de données de fonctionnement.

4. Ensemble selon l'une quelconque des revendications précédentes, **caractérisé en ce qu'**une commande d'installation (34) est reliée au dispositif de commande de soupape (13) pour commander les états de commutation de la soupape (1).

5. Ensemble selon la revendication 4, **caractérisé en ce que** la commande d'installation (34) comprend un élément d'utilisation (35) pour détecter au moins un paramètre de commande.

6. Ensemble selon la revendication 4 ou 5, **caractérisé en ce que** l'appareil mobile (2) comprend un dispositif de visualisation (21), dans lequel des paramètres de commande sont affichés.

7. Ensemble selon l'une quelconque des revendications précédentes, **caractérisé en ce que** l'identifiant optique (18) comprend une chaîne de caractères alphanumériques.

8. Ensemble selon l'une quelconque des revendications précédentes, **caractérisé en ce qu'**une première unité de communication sans fil (17) et une deuxième unité de communication sans fil (20) comprennent respectivement un module radio.

9. Procédé pour faire fonctionner un ensemble avec une soupape (1) d'une installation de processus avec différents types de soupapes, dans lequel la soupape (1) comprend un identifiant optique (18) et un dispositif de commande de soupape (13), à partir duquel un jeu de données de soupape clairement associé à une soupape définie de l'installation de processus peut être lu, et un appareil mobile (2), lequel comprend une unité de détection optique (19), dans lequel l'identifiant optique (18) est détecté avec l'unité de détection optique (19) et est transformé en un jeu de données d'identifiant, et est généré dans l'appareil mobile (2) un groupe de jeu de données, lequel contient le jeu de données d'identifiant et le jeu de données de soupape, **caractérisé en ce qu'**une liaison sans fil (D) est établie entre le dispositif de commande de soupape (13) et l'appareil mobile (2) et le jeu de données de soupape est transmis par le dispositif de commande de soupape (13) à l'appareil mobile (2), et qu'une période de détection est fixée, dans laquelle des états de fonctionnement sont détectés dans le dispositif de commande de soupape (13), dans lequel les états de fonctionnement sont déterminés avec un capteur (15) de la soupape et un jeu de données de fonctionnement représentant des états de fonctionnement et pouvant être intégré dans le jeu de données de soupape est stocké dans un système de stockage du dispositif de soupape, et que les états de fonctionnement détectés sont lus avec l'appareil mobile (2), et que des données d'erreur sont détectées dans le dispositif de commande de soupape (13), sont stockées dans un système de stockage d'erreurs (31c) du dispositif de commande de soupape et sont consultées avec l'appareil mobile (2) et que des données d'erreur sont transmises sur l'appareil mobile (2) et sont transférées par celui-ci à un dispositif de diagnostic (40) .

10. Procédé selon la revendication 9, **caractérisé en ce que** l'appareil mobile (2) est relié à un dispositif de fourniture (38), le groupe de jeux de données est envoyé et un jeu de données de réponse généré par le dispositif de fourniture (38) est reçu.

11. Procédé selon la revendication 9 ou 10, **caractérisé en ce que** les états de fonctionnement sont lus avec l'appareil mobile (2) et sont transmis à une unité d'évaluation (45).

12. Procédé selon l'une quelconque des revendications 9 à 11, **caractérisé en ce qu'**un jeu de données de commande est lu avec l'appareil mobile (2) depuis le dispositif de commande de soupape (13) et est traité dans l'appareil mobile (2) avec le groupe de jeux de données et des données de commande modifiées sont générées.

13. Procédé selon la revendication 12, **caractérisé en ce que** les données de commande modifiées sont affichées sur l'appareil mobile (2) et sont saisies par un utilisateur dans une commande d'installation (34) reliée au dispositif de commande de soupape (13).

14. Procédé selon la revendication 9, dans lequel l'identifiant optique (18) est détecté par un système de balayage optique (A) avec l'unité de détection optique (19), **caractérisé en ce que** la fonction de la soupape est détectée par un enregistrement d'image (0, 0') de marquages plus visibles depuis l'extérieur représentatifs de la fonction de la soupape (1), en particulier des positions de commutation de son élément de fermeture (8), et l'identifiant optique (18) et l'enregistrement d'image (O, O') sont associés l'un à l'autre.
